# EUROPÄISCHE PATENTSCHRIFT

(11) **EP 1 642 547 B1**
(45) Veröffentlichungstag und Bekanntmachung des Hinweises auf die Patenterteilung: **02.12.2009**
(21) Anmeldenummer: 04023260.5
(22) Anmeldetag: 30.09.2004
(51) Int. Cl.: A61C 1/08, A61C 19/04

(54) **Dentales Handstück mit einer Wurzelkanallängen-Messfunktion**
Dental handpiece having means for measuring the root canal length
Pièce à main dentaire pourvue de moyens pour mesurer la longeur des canaux dentaires

(43) Veröffentlichungstag der Anmeldung: 05.04.2006
(73) Patentinhaber: W & H Dentalwerk Bürmoos GmbH, 5111 Bürmoos (AT)
(72) Erfinder: Eibl, Johann, Dipl. Ing., 5230 Mattighofen (AT); Brandstätter, Andreas A., 5120 St. Pantaleon 11/5 (AT)

(56) Entgegenhaltungen:
- EP-A- 1 444 966
- DE-A1- 19 520 765
- DE-A1- 19 702 370

## Beschreibung

Die vorliegende Erfindung betrifft ein dentales Handstück zur Behandlung von Wurzelkanälen und zur Messung der Länge eines Wurzelkanals nach dem Oberbegriff des Patentanspruchs 1.

Ein derartiges Handstück ist Teil einer Vorrichtung zur Bestimmung der Länge (Tiefe) eines Wurzelkanals bzw. der Position des im Handstück eingespannten Behandlungswerkzeugs. Die Vorrichtung umfasst neben dem Handstück zwei Elektroden und eine Steuer- und Auswerteeinheit. Die erste Elektrode, meist in Form einer Klammer, wird an der Mundschleimhaut des Patienten befestigt. Als zweite Elektrode wird das im Handstück eingespannte Werkzeug verwendet, zum Beispiel eine hin- und herbewegte (eine Hubbewegung durchlaufende) Feile, eine Reibahle (Reamer) oder ein rotierender Bohrer. Beide Elektroden sind mit der Steuer- und Auswerteeinheit verbunden. Die Steuer- und Auswerteeinheit ist zur Abgabe eines Messsignals mit einer Stromquelle verbunden und umfasst weiters eine Messvorrichtung, bevorzugt eine Messschaltung, die die Länge des Wurzelkanals bzw. die Position des Werkzeugs durch Bestimmung der Änderung des ohmschen Widerstands oder der Impedanzänderung der Messsignale zwischen den beiden Elektroden ermittelt.

Aus der EP 1 444 966 A1 ist ein Handstück bekannt bei dem die Signalleitung über einen außerhalb des Handstücks angeordnete Leitungsdraht erfolgt, der mit dem als Elektrode dienenden Werkzeug über eine Klammer und einen Klammerhalter verbunden ist. Als Nachteil erweist sich hierbei der an der Griffhülse des Handstücks befestigte Leitungsdraht, der die Handhabbarkeit des Handstücks einschränkt.

Um diesen Nachteil zu vermeiden werden Handstücke hergestellt, bei denen im Inneren des Handstücks angeordnete Leiter oder Bauteile der Handstücke die Signalleitung übernehmen: Die DE 197 02 370 A1 offenbart im Inneren des Handstücks oder in der Hülse des Handstücks angeordnete Leitungsdrähte, die das als Elektrode dienenden Werkzeug mittels einer Kontaktvorrichtung kontaktieren. In der DE 195 20 765 A1 werden zur Übertragung der Antriebskraft dienenden Bauteile, insbesondere Wellen und Getriebe, Teile der Außenhülse und damit in Kontakt stehende Bauteile zur Signalübertragung verwendet.

Bei beiden Ausführungsformen besteht die Notwendigkeit, dass zumindest Teile der Außenhülsen isolierend ausgeführt sein müssen, damit eine Beeinträchtigung des Messkreises durch Kontaktierung des Handstücks mit der Mundhöhle des Patienten oder der Hand des Anwenders verhindert wird. Zur Isolierung kann ein Abschnitt der Griffhülse aus Kunststoff hergestellt sein, wie in der DE '370 A1 offenbart. Alternativ kann ein isolierender Film an der Außenfläche der Außenhülse angebracht sein, wie insbesondere in den Absätzen [0043] und [0076] der DE '765 A1 erläutert wird.

Nachteilig bei diesen bekannten Handstücken ist einerseits der erhöhte Herstellungsaufwand der mit der Beschichtung verbunden ist und andererseits, dass Kunststoffe, die zur Beschichtung oder als Material der Griffhülsenabschnitte verwendet werden gegenüber den bei der Sterilisation, insbesondere der Dampfsterilisation, herrschenden Umgebungsbedingungen nicht stabil sind. Da die Handstücke jedoch nach jedem Einsatz sterilisiert werden sollen, ist die Lebensdauer derartiger Beschichtungen oder Griffhülsenabschnitte sehr begrenzt.

Der vorliegenden Erfindung liegt daher die Aufgabe zugrunde ein dentales Handstück zur Behandlung von Wurzelkanälen und zur Messung der Länge eines Wurzelkanals unter Vermeidung der oben angeführten Nachteile zu schaffen. Das Handstück soll insbesondere gegenüber den bei der Sterilisation herrschenden Umgebungsbedingungen unempfindlich sein.

Diese Aufgabe wird gemäß der vorliegenden Erfindung durch ein Handstück mit den Merkmalen des Anspruchs 1 gelöst. Besonders vorteilhafte Ausführungsformen sind in den Unteransprüchen angeführt.

Die Außenhülse des erfindungsgemäßen Handstücks besteht aus nicht isolierendem, bevorzugt metallischem, Material, und weist auch keine isolierende Beschichtung auf. Dadurch ist sie gegenüber den bei der Sterilisation herrschenden Umgebungsbedingungen unempfindlich. Zur Gewährleistung einer einwandfreien Wurzelkanal-Längenmessung und Signalleitung sind weiters alle Bauteile des erfindungsgemäßen Handstücks, die Teil der Vorrichtung zur Übertragung der Messsignale oder der Kontaktvorrichtung sind und damit unter Spannung stehen durch Isolationsmittel von der Außenhülse isoliert. Teil der Kontaktvorrichtung sind all jene Bauteile, die eine leitende Verbindung zwischen der Vorrichtung zur Übertragung der Messsignale und dem als Elektrode dienenden Werkzeug herstellen.

Teile der Kontaktvorrichtung können auch außerhalb des erfindungsgemäßen Handstücks angeordnet sein. Dies ist insbesondere dann notwendig, wenn ein Werkzeug verwendet wird, dessen Schaft nicht leitend ist. Ein derartiges Werkzeug, zum Beispiel eine Feile, besteht aus einem metallischen und damit leitenden Arbeitsbereich und einem daran anschließenden Schaft, der zumindest teilweise (insbesondere in jenem Bereich, in dem der Schaft in die Werkzeugaufnahme des Handstücks gesteckt wird) von einer Kunststoffhülle umgeben ist. Um bei einem derartigen Werkzeug eine Verbindung zwischen dem leitenden Abschnitt des Werkzeugs und der Vorrichtung zur Übertragung der Messsignale herstellen zu können, wird eine Kontaktvorrichtung benötigt, die das Werkzeug außerhalb des Handstücks kontaktiert.

Die Erfindung wird nachfolgend anhand eines bevorzugten Ausführungsbeispiels und Bezug nehmend auf beigefügten Zeichnungen erläutert:
Figur 1 zeigt eine Schnittdarstellung eines erstes Ausführungsbeispiel eines erfindungsgemäßen Handstücks.
Figur 2 zeigt den in vergrößertem Maßstab den Kopf des erfindungsgemäßen Handstücks aus Figur 1.
Figur 3 zeigt eine Schnittdarstellung ein zweites Ausführungsbeispiel eines erfindungsgemäßen Handstücks.

Gleiche Bauteile sind in allen Figuren mit den selben Ziffern beschriftet.

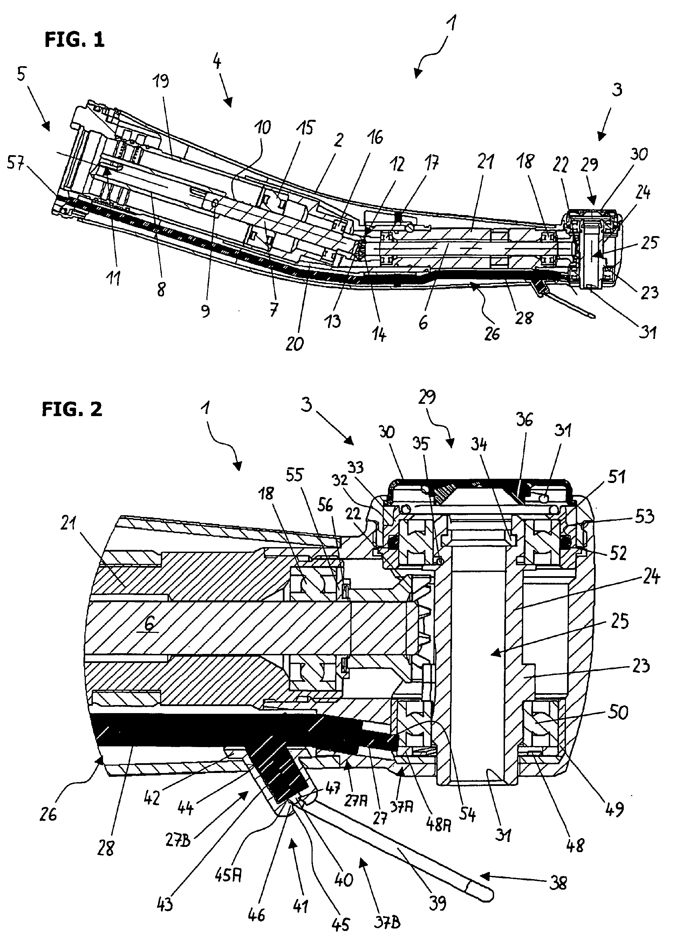

Das in Figur 1 dargestellt gewinkelte Handstück 1 umfasst eine Außenhülse 2 mit einem Kopfabschnitt 3 und einem Griffabschnitt 4. Die gesamte Außenhülse 2 (einschließlich Druckknopf 29) ist vollständig aus nicht isolierendem, bevorzugt metallischem, Material hergestellt und weist keine isolierende Beschichtung auf. Am proximalen Ende der Außenhülse 2 befindet sich eine Anschlussvorrichtung 5 zur Kupplung des Handstücks an eine Steuer- und Auswerteeinheit, an einen Messkrels mit einer Stromquelle zur Längenmessung des Wurzelkanals und an eine Antriebseinheit. Die Anschlussvorrichtung 5 ist bevorzugt als dem Fachmann bekannte Steck-Drehkupplung ausgeführt, so dass auf eine detaillierte Beschreibung verzichtet wird.

Das Innere des Griffabschnitts 4 wird von mehreren Elementen zur Übertragung der Antriebsbewegung, umfassend eine als Mitteltrieb 6 bezeichnete erste Welle, eine als Triebwelle 7 bezeichnete zweiten Welle und einer Hohlwelle 8, durchsetzt. Triebwelle 7 ist im distalen Ende der Hohlwelle 8 aufgenommen und über einen Zylinderkerbstift 9 fixiert. Eine Feder 10 spannt die Hohlwelle 8 gegen die Triebwelle 7 vor und lässt ein axiales Spiel der Hohlwelle 8 gegenüber der Triebwelle 7 zu. Am proximalen Ende wird Hohlwelle 8 über einen Mitnehmer 11 mit der Rotorwelle der Antriebseinheit, bevorzugt einem Elektromotor, lösbar verbunden.

Triebwelle 7 und Mitteltrieb 6 sind über ein Getriebe 12, bestehend aus zwei mit den beiden Wellen 6, 7 verpressten Zahnrädern 13, 14 verbunden und durch mehrere Wälzlager 15, 16, 17, 18 in den Kupplungs- und Lagerhülsen 19, 20, 21 drehbar gelagert. Die Wälzlager 15, 16, 17, 18 werden mittels Federscheiben vorgespannt, wie es beispielhaft für Lager 18 in Figur 2 dargestellt ist, wobei Federscheibe 56 in einer ringförmigen Einkerbung der Distanzscheibe 55 angeordnet ist. Auf das distale Ende des Mitteltriebs 6 ist ein weiteres Zahnrad 22 aufgepresst, das mit einem Zahnrad 23, das mit einer als Obertrieb 24 bezeichneten Hohlwelle verbunden ist, kämmt. Obertrieb 24 ist gleichzeitig Teil der Werkzeugaufnahme 25, die in bekannter Weise ein Werkzeug lösbar aufnimmt. Die Rotationsbewegung der Antriebseinheit wird somit über die Elemente zur Übertragung der Antriebsbewegung 6, 7, 8 auf den Obertrieb 24, die Werkzeugaufnahme 25 und das Werkzeug, bevorzugt einen rotierenden Bohrer, übertragen. Selbstverständlich kann anstelle der Zahnräder 22, 23 ein Exzentergetriebe zwischen dem Mitteltrieb 6 und dem Obertrieb 24 angeordnet sein, wodurch das Werkzeug, bevorzugt eine Feile, in eine Hubbewegung (Hin- und Herbewegung) versetzt wird.

Zum Lösen des Werkzeugs aus der Werkzeugaufnahme 25 ist ein Druckknopf 29 vorgesehen, dessen Druckknopfdeckel 30 durch eine Feder 31 vorgespannt wird und an seiner Innenseite mit Keilen 36 versehen ist (Figur 2). Durch Drücken des Druckknopfdeckels 30 in Richtung der Öffnung 31 der Werkzeugaufnahme 25 bis zur Schulter 32 des Halterings 33 wird der durch eine weitere Feder 35 vorgespannte zylindrische Schieber 34 durch die Keile 36 radial (in der Figur 2 nach rechts) verschoben, bis er koaxial mit der Werkzeugaufnahme 25 angeordnet ist und das Werkzeug durch den Anwender aus der Werkzeugaufnahme 25 entnommen werden kann.

Im Inneren des erfindungsgemäßen Handstücks 1 ist weiters eine Vorrichtung 26 zur Übertragung der Messsignale für die Längenmessung angeordnet. Bei dem in Figur 1 dargestellten Handstück 1 wird die Vorrichtung 26 von einem Leitungsdraht 27 gebildet, der bei Betrieb der Längenmessung unter Spannung steht und von einem Isolationsmittel, bevorzugt einem Mantel 28 aus isolierendem Material, insbesondere aus Kunststoff, umgeben ist. Das proximale Ende des Leitungsdrahts 27 im Bereich der Anschlussvorrichtung 5 ist als Schleifkontakt 57 ausgebildet, der mit einem Schleifring des über die Anschlussvorrichtung 5 mit dem Handstück gekuppelten Anschlussteils, zum Beispiel der Antriebseinheit oder einer Kupplung, verbunden ist. Ist die Anschlussvorrichtung 5 eine nicht drehbare Steckkupplung, so ist das proximale Ende des Leitungsdrahts 27 als Kontaktstift ausgeführt, der in einer Steckbuchse des mit dem Handstück gekuppelten Anschlussteils aufgenommen wird.

Das distale Ende des Leitungsdrahts 27 ist in zwei Enden 27 A und 27 B gespalten. An jedem dieser beiden Enden 27 A, 27 B ist eine Kontaktvorrichtung 37 A, 37 B zur Herstellung einer leitenden Verbindung zwischen dem als Elektrode dienenden Werkzeug und dem Leitungsdraht 27 angeordnet. Kontaktvorrichtung 37 B ist für ein Werkzeuge vorgesehen, das einen nicht leitenden Abschnitt aufweist und besteht in bekannter Weise aus einem U-förmigen, elastischen Draht 38 mit zwei Schenkel 39 (in der Schnittdarstellung ist nur ein Schenkel erkennbar). In ihrem vorderen Endbereich sind die beiden Schenkel 39 nach innen gebogen. Dieser gebogene Bereich befindet sich im wesentlichen unter der Öffnung 31 der Werkzeugaufnahme 25, so dass ein in der Werkzeugaufnahme 25 eingespanntes Werkzeug zwischen den beiden Schenkel 39 hindurchläuft und an zwei Seiten von den Schenkeln 39 kontaktiert wird.

Die Basis 40 des U-förmigen Drahts 38 ist mit einer Hülse 41 verbunden, bevorzugt mittels einer Klemmverbindung. Die Hülse 41 hat an einem Ende einen Flansch 42, der an der Innenseite der Außenhülse 2 befestigt ist, bevorzugt durch Verkleben. Der Schaft 43 der Hülse 41 ragt durch eine Bohrung 44 der Außenhülse 2 nach außen, wobei der Durchmesser der Bohrung 44 kleiner ist als jener des Flansches 42. An dem dem Flansch 42 gegenüberliegenden Ende weist die Hülse 41 eine Nut 45 mit zwei Leisten 46, 47 auf, wobei der Durchmesser der Nut 45 etwas geringer ist als der Durchmesser der Basis 40 des U-förmigen Drahtes 38. Da die Seitenwände der Nut 45 schwach federnd ausgebildet sind, weichen sie, wenn der Anwender die Basis 40 an den Leisten 46, 47 anlegt und etwas Druck ausübt zu den Seiten hin aus, so dass die Basis 40 in den an die Leisten 46, 47 anschließenden Abschnitt 45 A der Nut 45 gelangt und durch die wieder in ihre ursprüngliche Position zurückgefederten Leisten 46, 47 fixiert wird. Zum Lösen zieht der Anwender am U-förmigen Draht 38, wodurch die Leisten 46, 47 wiederum seitlich ausweichen und die Basis 40 freigeben.

Im Inneren der Hülse 41 ist das Ende 27 B des Leitungsdrahts 27 aufgenommen und steht mit der im Abschnitt 45 A der Nut 45 geklemmten Basis 40 des U-förmigen Drahtes 38 in Kontakt, so dass eine durchgehende leitende Verbindung zwischen dem als Elektrode dienenden Werkzeug, den Schenkeln 39 und der Basis 40 des Drahtes 38, dem Ende 27 B und dem Leitungsdrahts 27 bis zum Schleifkontakt 57 gegeben ist.

Um eine Störung der Messung und Signalleitung zu verhindern muss die Hülse 41 als Isolationsmittel ausgebildet sein, d.h. aus nicht leitendem Material, bevorzugt aus Kunststoff, hergestellt oder damit beschichtet sein. Anstelle des Endes 27 B des Leitungsdrahts 27 ist es selbstverständlich auch möglich ein eigenständiges Bauteil aus leitendem Material zu verwenden, zum Beispiel eine Feder oder ein Biegeelement, das den Leitungsdraht 27 kontaktiert.

Wird ein Werkzeug verwendet, das vollständig aus leitendem Material besteht, so kann der Anwender den Draht 38 von der Hülse 41 trennen. In diesem Fall dient die Kontaktvorrichtung 37 A mit dem Ende 27 A der Leitungsdrahts 27 zur Verbindung des Werkzeugs mit dem Schleifkontakt 57. Ende 27 A kontaktiert den Außenring 48 A der Federscheibe 48 durch eine Bohrung 54 in der Buchse 49. Federscheibe 48 steht wiederum mit Obertrieb 24 als Teil der Werkzeugaufnahme 25 und dem darin aufgenommenen Werkzeug in schleifendem Kontakt. Federscheibe 48 mit Außenring 48 A und Obertrieb 24 stehen bei Betrieb der Wurzelkanallängenmessung unter Spannung. Federscheibe 48 ist in Buchse 49 gelagert und dient der Vorspannung des Wälzlagers 50, das mit Obertrieb 24 verpresst ist und diesen drehbar lagert. Ein zweites Wälzlager 51 ist in entsprechender Weise am Druckknopf-seitigen Ende des Obertriebs 24 angeordnet und wird durch einen O-Ring 52, der in einer Ringnut 53 des Halterings 33 gelagert ist, fixiert. Als schleifender Kontakt zwischen dem Obertrieb 24 und dem Leitungsdraht 27 können auch andere Elemente verwendet werden, zum Beispiel eine Bürste oder ein Kontaktstift.

Zur Gewährleistung einer einwandfreien Wurzelkanal-Längenmessung und Signalleitung über die Kontaktvorrichtung 37 A müssen zumindest folgende Bauteile als Isolationsmittel dienen, d.h. aus nicht leitendem Material hergestellt sein: Buchse 49, Haltering 33 und Zahnrad 22 und / oder 23. Um eine verbesserte Isolation der Außenhülse 2 zu erreichen, werden in einem bevorzugten Ausführungsbeispiel zusätzlich eines oder mehrere der Wälzlager 18, 50, 51, und / oder Distanzscheibe 55 und / oder Mitteltrieb 6 als Isolationsmittel aus nicht leitendem Material eingesetzt. In einem weiteren Ausführungsbeispiel ist der Mitteltrieb 6 aus mehreren Wellenabschnitten zusammengesetzt, wobei zumindest einer dieser Wellenabschnitte als nicht leitendes Isolationsmittel ausgebildet ist.

Als Materialien für die als Isolationsmittel dienenden Bauteil werden insbesondere Kunststoffe, bevorzugt PEEK oder Silikon, oder keramische Materialien verwendet. Auch Beschichtungen der als Isolationsmittel dienenden Bauteil mit diesen Materialien gewährleisten eine ausreichende Isolierung. Bevorzugt bestehen die Laufringe und / oder die Wälzkörper der Wälzlager 18, 50, 51 aus keramischen Materialien wie Siliziumnitrid, Zirkoniumnitrid oder Siliziumcarbid, Zahnrad 22, Haltering 33, Buchse 49, zumindest ein Teil des Mitteltriebs 6 und Distanzscheibe 55 aus Kunststoff.

Selbstverständlich kann ein Handstück auch nur mit einer Kontaktvorrichtung 37 A oder 37 B versehen sein, es ist jedoch vorteilhaft beide Kontaktvorrichtung 37 A und 37 B in einem Handstück 1 zu implementieren, da dieses Handstück 1 dann sowohl mit Werkzeugen mit oder ohne isoliertem Werkzeugschaft verwendet werden kann.

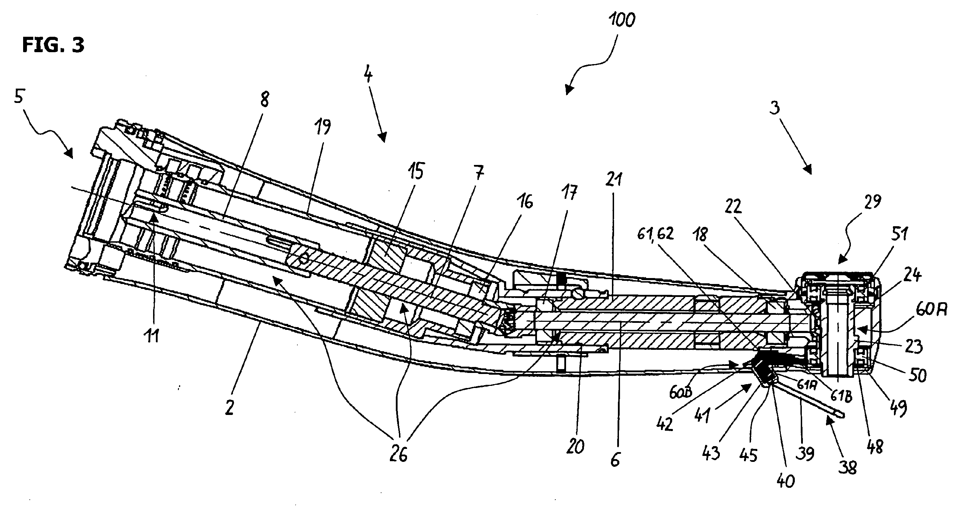

Das in Figur 3 dargestellte Handstück 100 gleicht in seinem prinzipiellen Aufbau Handstück 1, so dass von einer detaillierten Beschreibung abgesehen wird. Die gesamte Außenhülse 2 mit Griffabschnitt 4 und Kopfabschnitt 3 (einschließlich Druckknopf 29) ist wiederum vollständig aus nicht isolierendem, bevorzugt metallischem, Material hergestellt und weist keine isolierende Beschichtung auf.

Die Vorrichtung zur Übertragung der Messsignale 26 zur Bestimmung der Länge des Wurzelkanals wird bei Handstück 100 durch die Elemente zur Übertragung der Antriebsbewegung (Mitteltrieb 6, Triebwelle 7, Hohlwelle 8) gebildet. Diese Elemente stehen bei Betrieb der Wurzelkanallängenmessung unter Spannung und müssen aus leitendem Material bestehen. Für Werkzeuge mit leitendem Werkzeugschaft dienen der Obertrieb 24 mit Zahnrad 23 und Zahnrad 22 als unter Spannung stehende Kontaktvorrichtung 60 A. Bei Werkzeugen mit nicht leitendem Abschnitt des Werkzeugschafts ist der Einsatz der Kontaktvorrichtung 60 B notwendig, die einen leitenden Abschnitt des Werkzeugs mit den Elementen zur Übertragung der Antriebsbewegung 6, 7, 8 über den Obertrieb 24 und die Zahnräder 22, 23 verbindet. Kontaktvorrichtung 60 B umfasst einen U-förmigen, elastischen Draht 38, der mit seiner Basis 40 mit Hülse 41 verbunden ist, bevorzugt mittels Klemmverbindung, und einen Leitungsdraht 61 mit einem ersten Ende 61 A und einem zweiten Ende 61 B. Im hülsenförmigen Schaft 43 der Hülse 41 ist das erste Ende 61 A aufgenommen, das mit der im Abschnitt 45 A der Nut 45 geklemmten Basis 40 des U-förmigen Drahtes 38 in Kontakt steht. Das zweite Ende 61 B des Leitungsdrahtes 61 ist durch Bohrung 54 von Buchse 49 mit dem Außenring 48 A der Federscheibe 48 verbunden (Figur 2). Über den schleifenden Kontakt zwischen Federscheibe 48 und Obertrieb 24 als Teil der Werkzeugaufnahme 25 entsteht über die Zahnräder 22, 23 eine Verbindung zu den Elemente zur Übertragung der Antriebsbewegung 6, 7 ,8.

Die Weiterleitung der Messsignale erfolgt von Hohlwelle 8 über Mitnehmer 11 auf das über die Anschlussvorrichtung 5 mit dem Handstück gekuppelte Anschlussteil, zum Beispiel die Rotorwelle der Antriebseinheit oder die Welle einer Kupplung.

Zur Gewährleistung einer einwandfreien Wurzelkanal-Längenmessung und Signalleitung über die Kontaktvorrichtung 60 A müssen zumindest folgende Bauteile als Isolationsmittel dienen, d.h. aus nicht leitendem Material hergestellt sein: Haltering 33, Buchse 49. Bei Verwendung von Kontaktvorrichtung 60 B muss zusätzlich Hülse 41 als Isolationsmittel ausgebildet sein. Bevorzugt ist auch Leitungsdraht 61 mit einem isolierenden Mantel 62 umgeben. Um eine verbesserte Isolation des Kopfabschnitts 3 der Außenhülse 2 zu erreichen, werden in einem weiteren bevorzugten Ausführungsbeispiel zusätzlich eines oder beide Wälzlager 50, 51 als Isolationsmittel aus nicht leitendem Material eingesetzt.

Zur Isolierung des Griffabschnitts 4 der Außenhülse 2 sind zumindest die Wälzlager 15, 16, 17, 18 als Isolationsmittel auszuführen. Bevorzugt bestehen auch eine oder mehrere der Kupplungs- und Lagerhülsen 19, 20, 21 aus nicht leitendem Material. Die Materialien für die als Isolationsmittel dienenden Bauteil sind die gleichen wie für Handstück 1 beschrieben.

Die Erfindung ist nicht auf das dargestellte Anwendungsgebiet und das beschriebene Ausführungsbeispiel beschränkt, sondern umfaßt alle Ausführungsmöglichkeiten, die das prinzipielle, sinngemäßen Funktionsprinzip der Erfindung nicht verändern. Insbesondere ist die erfindungsgemäße Handstück zur Wurzelkanallängenmessung unabhängig von der Art der Antriebseinheit und umfasst auch pneumatische, piezoelektrische oder magnetostriktive Vibrationsantriebe. Abhängig von der Art der Antriebseinheit sind die Elementen zur Übertragung der Antriebsbewegung auf die Werkzeugausnahme unterschiedlich ausgebildet und können zum Beispiel auch Schwingstäbe oder flexible Wellen umfassen.

## Patentansprüche

1. Handstück (1, 100) zur Behandlung von Wurzelkanälen und zur Messung der Länge eines Wurzelkanals mit einer Außenhülse (2), einer Anschlussvorrichtung (5) zur Kupplung des Handstücks (1) an eine Steuer- und Auswerteeinheit, an einen Messkreis mit einer Stromquelle zur Längenmessung des Wurzelkanals und an eine Antriebseinheit, einer Werkzeugaufnahme (25), Elementen zur Übertragung der Antriebsbewegung (6, 7, 8) auf die Werkzeugaufnahme (25), wodurch diese und ein darin aufgenommenes Werkzeug In eine rotierende, hin- und herverlaufende oder schwingende Arbeitsbewegung versetzt werden, eine im Inneren des Handstücks (1, 100) angeordnete Vorrichtung zur Übertragung der Messsignale (26) für die Längenmessung und einer Kontaktvorrichtung (37 A, 37 B, 60 A, 60 B) zur Herstellung einer leitenden Verbindung zwischen dem als Elektrode dienenden Werkzeug und der Vorrichtung zur Übertragung der Messsignale (26), **gekennzeichnet durch**
eine Außenhülse (2) aus nicht isolierendem, bevorzugt metallischem, Material, die frei von isolierender Beschichtung ist, und **durch** Isolationsmittel, die jene Bauteile, die die Vorrichtung zur Übertragung der Messsignale (26) und die Kontaktvorrichtung (37 A, 37 B, 60 A, 60 B) bilden und damit unter Spannung setzbar sind, von der Außenhülse (2) isolieren.

2. Handstück (1, 100) nach Anspruch 1, **dadurch gekennzeichnet, dass**
die Vorrichtung zur Übertragung der Messsignale (26) einen Leitungsdraht (27) und die Isolationsmittel einen Mantel (28) aus nicht leitendem Material umfassen.

3. Handstück (1, 100) nach Anspruch 1, **dadurch gekennzeichnet, dass**
die Vorrichtung zur Übertragung der Messsignale (26) die Elemente zur Übertragung der Antriebsbewegung (6, 7, 8) und die Isolationsmittel die Wälzlager (15, 16, 17, 18), welche die Elemente zur Übertragung der Antriebsbewegung (6, 7, 8) lagern, umfassen.

4. Handstück (1, 100) nach Anspruch 3, **dadurch gekennzeichnet, dass**
die isolationsmittel zusätzlich zumindest eine Kupplungs- und Lagerhülse (19, 20, 21) und / oder eine Distanzscheibe (55) umfassen.

5. Handstück (1, 100) nach einem der vorhergehenden Ansprüche, **gekennzeichnet durch**
eine erste Kontaktvorrichtung (37 A, 60 A), insbesondere für Werkzeuge mit leitendem Schaft, die das Werkzeug mit der Vorrichtung zur Übertragung der Messsignale (26) verbindet.

6. Handstück (1, 100) nach Anspruch 2 in Kombination mit Anspruch 5, **gekennzeichnet durch**
eine erste Kontaktvorrichtung (37 A) mit einem schleifenden Kontakt, bevorzugt einer Federscheibe (48, 48 A), einer Bürste oder einem Kontaktstift, zwischen dem Obertrieb (24) und dem Leitungsdraht (27).

7. Handstück (1, 100) nach Anspruch 6, **dadurch gekennzeichnet, dass**
die Isolatonsmittel zumindest ein Zahnrad (22, 23), einen Haltering (33) und eine Buchse (49) umfassen.

8. Handstück (1, 100) nach Anspruch 7, **dadurch gekennzeichnet, dass**
die Isolationsmittel zumindest ein Wälzlager (18, 50, 51) und / oder eine Distanzschelbe (55) und / oder zumindest einen Teil der Welle (6) umfassen.

9. Handstück (1, 100) nach Anspruch 3 oder 4 in Kombination mit Anspruch 5, **dadurch gekennzeichnet, dass**
die erste Kontaktvorrichtung (60 A) einen Obertrieb (24) und die Zahnräder (22, 23), die den Obertrieb (24) mit einer Welle (6) verbinden, umfasst.

10. Handstück (1, 100) nach Anspruch 9, **dadurch gekennzeichnet, dass**
die Isolationsmittel einen Haltering (33) und eine Buchse (49) umfassen.

11. Handstück (1, 100) nach Anspruch 10, **dadurch gekennzeichnet, dass**
die Isolationsmittel zusätzlich zumindest eines der Wälzlager (50, 51) zur Lagerung des Obertriebs (24) umfassen.

12. Handstück (1, 100) nach einem der vorhergehenden Ansprüche, **gekennzeichnet durch**
eine zweite Kontaktvorrichtung (37 B, 60 B), insbesondere für Werkzeuge mit nicht leitendem Schaft, die einen leitenden Abschnitt des Werkzeugs mit der Vorrichtung zur Übertragung der Messsignale (26) verbindet.

13. Handstück nach Anspruch 2 in Kombination mit Anspruch 12, **gekennzeichnet durch**
eine zweite Kontaktvorrichtung (37 B) mit einer Hülse (41), die mit dem Handstück (1, 100) verbunden ist, und einem U-förmigen, elastischen Draht (38), der mit der Hülse (41) lösbar verbunden ist, bevorzugt **durch** eine Klemmverbindung, wobei die Hülse (41) als Isolationsmittel ausgebildet ist.

14. Handstück (1, 100) nach Anspruch 13, **dadurch gekennzeichnet, dass**
der Schaft (43) der Hülse (41) das Ende (27 B) des Leltungsdrahts (27) aufnimmt.

15. Handstück nach Anspruch 13 oder 14, **dadurch gekennzeichnet, dass**
an einem Ende der Hülse (41) ein Flansch (42) angeordnet ist, der im Inneren des Handstücks (1, 100) fixiert ist und dass der an den Flansch (42) anschließende Schaft (43) durch eine Bohrung (44) in der Außenhülse (2) nach außen ragt.

16. Handstück (1, 100) nach Anspruch 3 oder 4 in Kombination mit Anspruch 12, **gekennzeichnet durch**
eine zweite Kontaktvorrichtung (60 B), die einen leitenden Abschnitt des Werkzeugs mit den Elementen zur Übertragung der Antriebsbewegung (6, 7, 8) über einen Obertrieb (24) und Zahnräder (22, 23) verbindet.

17. Handstück (1, 100) nach Anspruch 16, **gekennzeichnet durch**
eine zweite Kontaktvorrichtung (60 B) mit einer Hülse (41), die mit dem Handstück (1 100) verbunden ist, und einem U-förmigen, elastischen Draht (38), der mit der Hülse (41) lösbar verbunden ist, bevorzugt **durch** eine Klemmverbindung, wobei die Hülse (41) als Isolationsmittel ausgebildet ist und der Schaft (43) der Hülse (41) ein Ende (61 A) eines Leitungsdrahts (61) aufnimmt und das zweite Ende (61 B) des Leitungsdrahts (61) über einen schleifenden Kontakt, bevorzugt eine Federscheibe (48, 48 A), eine Bürste oder ein Kontaktstift, mit dem Obertrieb (24) verbunden ist.

18. Handstück (1, 100 nach Anspruch 17, **dadurch gekennzeichnet, dass**
die Isolationsmittel einen Halterring (33), eine Buchse (49) und den Mantel (62) des Leitungsdrahts (61) umfassen.

19. Handstück (1, 100) nach Anspruch 18, **dadurch gekennzeichnet, dass**
die Isolationsmittel zusätzlich zumindest eines der Wälzlager (50, 51) zur Lagerung des Obertriebs (24) und / oder eine Distanzscheibe (55) umfassen.

20. Handstück nach einem der vorhergehenden Ansprüche, **dadurch gekennzeichnet, dass**
die Isolationsmittel aus Kunststoff, bevorzugt PEEK oder Silikon, oder keramischen Materialien, bevorzugt Siliziumnitrid. Zirkoniumnitrid oder Siliziumcarbid, bestehen oder mit Kunststoff oder keramischen Materialien beschichtet sind.

## Claims

1. Handpiece (1, 100) for the treatment of root canals and the measurement of the root canal length with an outer sleeve (2), a connecting device (5) for coupling the handpiece (1) to a control and evaluation unit, to a measuring circuit with a current source for the measurement of the root canal length and to a drive unit, an instrument carrier (25), elements for the transmission of the drive movement (6, 7, 8) to the instrument carrier (25), so that the latter and a dental instrument inserted in it execute a rotating, reciprocating or vibrating working movement, a device for the transmission of the measuring signals (26) for the length measurement disposed inside the handpiece (1, 100) and a contact device (37 A, 37 B, 60 A, 60 B) for establishing a conductive path between the dental instrument serving as electrode and the device for the transmission of the measuring signals (26), **characterized by**
an outer sleeve (2) consisting of a non-insulating, preferably metallic, material and being free from any insulating coating and by insulating means which insulate those components which constitute the device for the transmission of the measuring signals (26) and the contact device (37 A, 37 B, 60 A, 60 B) and through which therefore a voltage can be applied from the outer sleeve (2).

2. Handpiece (1, 100) according to claim 1, **characterized in that**
the device for the transmission of the measuring signals (26) comprises a conducting wire (27) and the insulating means comprise a sheath (28) of non-conductive material.

3. Handpiece (1, 100) according to claim 1, **characterized in that**
the device for the transmission of the measuring signals (26) comprises the elements for the transmission of the drive movement (6, 7, 8) and **in that** the insulating means comprise the rolling bearings (15, 16, 17, 18) which support the elements for the transmission of the drive movement (6, 7, 8).

4. Handpiece (1, 100) according to claim 3, **characterized in that**
the insulating means additional comprise at least one of a coupling and bearing sleeve (19, 20, 21) and/or a spacer disk (55).

5. Handpiece (1, 100) according to any one of the preceding claims, **characterized by**
a first contact device (37 A, 60 A), in particular for dental instruments with a conductive shaft, which connects the dental instrument to the device for the transmission of the measuring signals (26).

6. Handpiece (1, 100) according to claim 2 in combination with claim 5, **characterized by** a first contact device (37A) with a sliding contact, preferably a spring washer (48, 48 A), a brush or a contact pin, between the head spindle (24) and the conducting wire (27).

7. Handpiece (1, 100) according to claim 6, **characterized in that**
the insulating means comprise at least one gearwheel (22, 23), a supporting ring (33) and a socket (49).

8. Handpiece (1, 100) according to claim 7, **characterized in that**
the insulating means comprise at least one rolling bearing (18, 50, 51) and/or one spacer disk (55) and/or at least a part of a shaft (6).

9. Handpiece (1, 100) according to claim 3 or 4 in combination with claim 5, **characterized in that**
the first contact device (60A) comprises a head spindle (24) and the gearwheels (22, 23), which connect the head spindle (24) to a shaft (6).

10. Handpiece (1, 100) according to claim 9, **characterized in that**
the insulating means comprise a supporting ring (33) and a socket (49).

11. Handpiece (1, 100) according to claim 10, **characterized in that**
additionally the insulating means comprise at least one of the rolling bearings (50, 51) which support the head spindle (24).

12. Handpiece (1, 100) according to any one of the preceding claims, **characterized by**
a second contact device (37 B, 60 B), in particular for dental instruments with a non-conductive shaft, connecting a conductive section of the dental instrument to the device for the transmission of the measuring signals (26).

13. Handpiece according to claim 2 in combination with claim 12, **characterized by**
a second contact device (37 B) with a sleeve (41) connected to the handpiece (1, 100), and a U-shaped elastic wire (38), detachably connected to the sleeve (41), preferably by a clamping connection, wherein the sleeve (41) is designed as the insulating means.

14. Handpiece (1, 100) according to claim 13, **characterized in that**
the stem (43) of the sleeve (41) holds the end (27B) of the connecting wire (27).

15. Handpiece according to claim 13 or 14, **characterized in that**
a flange (42) is arranged at one end of the sleeve (41) which is fixed within the handpiece (1, 100) and **in that** the stem (43) adjacent to the flange (42) projects outwards through a bore (44) in the outer sleeve (2).

16. Handpiece (1, 100) according to claim 3 or 4 in combination with claim 12, **characterized by**
a second contact device (60 B) connecting a conductive section of the dental instrument to the elements (6, 7, 8) for the transmission of the drive movement via a head spindle (24) and gearwheels (22, 23).

17. Handpiece (1, 100) according to claim 16, **characterized by**
a second contact device (60 B) with a sleeve (41) connected to the handpiece (1, 100) and a U-shaped elastic wire (38) detachably connected to the sleeve (41), preferably by a clamping connection, wherein the sleeve (41) is designed as insulating means and the stem (43) of the sleeve (41) holds one end (61A) of a connecting wire (61), while the second end (61 B) of the connecting wire (61) is connected via a sliding contact, preferably a spring washer (48, 48 A), a brush or a contact pin, to the head spindle (24).

18. Handpiece (1, 100) according to claim 17, **characterized in that**
the insulating means comprise a supporting ring (33), a socket (49) and the sheath (62) of the connecting wire (61).

19. Handpiece (1, 100) according to claim 18, **characterized in that**
the insulating means additionally comprise at least one of the rolling bearings (50, 51) for supporting the head spindle (24) and/or a spacer disk (55).

20. Handpiece according to any one of the preceding claims, **characterized in that**
the insulating means consist of plastic, preferably PEEK or silicone, or ceramic materials, preferably silicon nitride, zirconium nitride or silicon carbide, or that they are coated with plastic or ceramic materials.

## Revendications

1. Pièce manuelle (1, 100) pour le traitement de canaux radiculaires et pour la mesure de la longueur d'un canal radiculaire, comportant un manchon extérieur (2), un dispositif de connexion (5) pour le raccordement de la pièce manuelle (1) à une unité de commande et d'exploitation, à un circuit de mesure doté d'une source de courant pour mesurer la longueur du canal radiculaire et à une unité d'entraînement, un porte-outils (25), des éléments de transmission du mouvement d'entraînement (6, 7, 8) au porte-outil (25), ce qui met celui-ci et un outil posé dessus en mouvement opérationnel rotatif, en va et vient ou en oscillation, un dispositif disposé à l'intérieur de la pièce manuelle (1, 100) pour transmettre les signaux de mesure (26) pour la mesure de longueur et un dispositif de contact (37A, 37B, 60 A, 60 B) pour établir une liaison conductrice entre l'outil servant d'électrode et le dispositif de transfert de signaux de mesure (26), **caractérisée par**
un manchon extérieur (2) en matériau non isolant, de préférence métallique, qui est exempt de revêtement isolant et par des moyens d'isolation qui isolent les composantes, qui constituent le dispositif de transfert des signaux de mesure (26) et le dispositif de contact (37 A, 37 B, 60 A, 60 B) et peuvent ainsi être mis sous tension, du manchon extérieur (2).

2. Pièce manuelle (1, 100) selon la revendication 1, **caractérisée en ce que**
le dispositif de transmission des signaux de mesure (26) comprend un fil conducteur (27) et les moyens d'isolation une chemise (28) en matière non conducteur.

3. Pièce manuelle (1, 100) selon la revendication 1, **caractérisée en ce que**
le dispositif de transmission des signaux de mesure (26) comprend les éléments de transmission du mouvement d'entraînement (6, 7, 8) et les moyens d'isolation comprennent les paliers à roulements (15, 16, 17, 18) sur lesquels s'appuient les éléments de transmission du mouvement d'entraînement (6, 7, 8).

4. Pièce manuelle (1, 100) selon la revendication 3, **caractérisée en ce que**
les moyens d'isolation comprennent en plus au moins un manchon de raccordement et d'appui (19, 20, 21) et/ou une entretoise (55).

5. Pièce manuelle (1, 100) selon une des revendications précédentes, **caractérisée par**
un premier dispositif de contact (37 A, 60 A), notamment pour outils à tige conductrice, qui relie l'outil au dispositif de transmission des signaux de mesure (26).

6. Pièce manuelle (1, 100) selon la revendication 2 en combinaison avec la revendication 5, **caractérisée par**
un premier dispositif de contact (37 A) doté d'un contact de frottement, de préférence une rondelle à ressort (48, 48 A), une brosse ou une tige de contact, entre la propulsion supérieure (24) et le fil conducteur (27).

7. Pièce manuelle (1, 100) selon la revendication 6, **caractérisée en ce que**
les moyens d'isolation comprennent au moins une roue dentée (22, 23), une bague de retenue (33) et une douille (49).

8. Pièce manuelle (1, 100) selon la revendication 7, **caractérisée en ce que**
les moyens d'isolation comprennent au moins un palier à roulements (18, 50, 51) et/ou une entretoise (55) et/ou au moins une partie de l'arbre (6).

9. Pièce manuelle (1, 100) selon la revendication 3 ou 4 en combinaison avec la revendication 5, **caractérisée en ce que**
le premier dispositif de contact (60 A) comprend la propulsion supérieure (24) et les roues dentées (22, 23), qui relient la propulsion supérieure (24) à l'arbre (6).

10. Pièce manuelle (1, 100) selon la revendication 9, **caractérisée en ce que**
les moyens d'isolation comprennent une bague de retenue (33) et une douille (49).

11. Pièce manuelle (1, 100) selon la revendication 10, **caractérisée en ce que**
les moyens d'isolation comprennent en plus au moins un des paliers à roulements (50, 51) pour l'appui de la propulsion supérieure (24).

12. Pièce manuelle (1, 100) selon une des revendications précédentes, **caractérisée par**
un deuxième dispositif de contact (37 B, 60 B), notamment pour outils à tige non conductrice, qui relie une section conductrice de l'outil au dispositif de transmission des signaux de mesure (26).

13. Pièce manuelle selon la revendication 2 en combinaison avec la revendication 12, **caractérisée par**
un deuxième dispositif de contact (37 B) comportant un manchon (41), qui est relié à la pièce manuelle (1, 100) et un fil élastique en forme de U (38) qui est relié de manière dissociable au manchon (41), de préférence par serrage, le manchon (41) se présentant sous la forme d'un moyen d'isolation.

14. Pièce manuelle (1, 100) selon la revendication 13, **caractérisée en ce que**
la tige (43) du manchon (41) reçoit l'extrémité (27 B) du fil conducteur (27).

15. Pièce manuelle selon la revendication 13 ou 14, **caractérisée en ce que**
à une extrémité du manchon (41) est disposée une bride (42) qui est fixée à l'intérieur de la pièce manuelle (1, 100) et que la tige (43) se raccordant à la bride (42) dépasse vers l'extérieur par un alésage (44) pratiqué dans le manchon extérieur (2).

16. Pièce manuelle (1, 100) selon la revendication 3 ou 4 en combinaison avec la revendication 12, **caractérisée par**
un deuxième dispositif de contact (60 B) qui relie une section conductrice de l'outil aux éléments de transmission du mouvement d'entraînement (6, 7, 8) via la propulsion supérieure (24) et les roues dentées (22, 23).

17. Pièce manuelle (1, 100) selon la revendication 16, **caractérisée par**
un deuxième dispositif de contact (60 B) comportant un manchon (41) qui est relié à la pièce manuelle (1, 100) et un fil élastique en forme de U (38) qui est relié de manière dissociable au manchon (41), de préférence par serrage, le manchon (41) se présentant sous forme d'un moyen d'isolation et la tige (43) du manchon (41) recevant une extrémité (61 A) d'un fil conducteur (61) et la deuxième extrémité (61 B) du fil conducteur (61) étant reliée par un contact de frottement, de préférence une rondelle à ressort (48, 48 A), une brosse ou une tige de contact, à la propulsion supérieure (24).

18. Pièce manuelle (1, 100) selon la revendication 17, **caractérisée en ce que**
les moyens d'isolation comprennent une bague de retenue (33), une douille (49) et la chemise (62) du fil conducteur (61).

19. Pièce manuelle (1, 100) selon la revendication 18, **caractérisée en ce que**
les moyens d'isolation comprennent en plus au moins un des paliers à roulements (50, 51) pour l'appui de la propulsion supérieure (24) et/ou une entretoise (55).

20. Pièce manuelle selon une des revendications précédentes, **caractérisée en ce que**
les moyens d'isolation sont composés de matière plastique, de préférence de PEEK ou de silicone ou de matériaux céramiques, de préférence du nitrure de silicium, du nitrure de zirconium ou du carbure de silicium, ou sont revêtus de matière plastique ou de matériaux céramiques.
